# EUROPEAN PATENT APPLICATION

(11) **EP 2 009 068 A1**
(43) Date of publication of application: **31.12.2008**
(21) Application number: 07741487.8
(22) Date of filing: 12.04.2007
(51) Int. Cl.: C09D 4/00, B05D 3/06, C09D 101/02, C09D 103/02, G11B 7/24, G11B 7/254, G11B 7/257, G11B 11/105, G11B 23/02

(54) **COATING AGENT, MOLDED ARTICLE, AND METHOD FOR PRODUCTION OF COATING AGENT**

(30) Priority: 14.04.2006 JP 2006111559
(71) Applicant: Idemitsu Technofine Co. Ltd, Sumida-ku, Tokyo 130-0015 (JP)
(72) Inventor: FUKATSU, Fumioki, Sodegaura-shi, Chiba 299-0205 (JP); MACHIDA, Yoshinori, Sodegaura-shi, Chiba 299-0205 (JP)
(74) Representative: Clarke, Lionel Paul
(86) International application number: PCT/JP2007/058051
(87) International publication number: WO 2007/119776

(57) **Abstract**

A UV-curable coating agent contains a water-absorptive filler (21) having mean particle size of 0.4µm or less and maximum particle size of 4µm or less, and viscosity of the coating agent is 30Pa·s or less. The coating agent is applied on a surface of the base material (3) to form an ink-receiving layer (2). In order to manufacture the coating agent, after the water-absorptive filler is added to UV-curable monomer, the water-absorptive filler is subjected to wet-grinding.

## Description

### Technical Field

The present invention relates to a coating agent, a molding product including the coating agent as an ink-receiving layer and a producing method of the coating agent.

### Background Art

Conventionally, in the field of information processing, there have been widely used information recording media that can electrically record, reproduce and re-write information. The known information recording media may be information recording media, such as a compact disc (CD) and a digital video disc (DVD) as an optical information recording medium having an information recording layer on a resin base material, or may be information recording media such as a flexible disc (FD), a magnet-optical (MO) disc, a mini disc (MD) and a cassette tape having an information recording section accommodated in a resin base material such as a cartridge.

Such information recording medium has information recording ability. In addition, index for recorded contents and various decorative designs are generally printed on a surface of the information recording medium. For printing, a known printing method such as ink-jet printing and screen printing is employed.

Meanwhile, since a resin surface of the information recording medium is not ink-absorptive, an ink-receiving layer is formed on the resin surface to perform printing on the ink-receiving layer in order to perform the ink-jet printing on the resin surface. For example, a paper or a CD-R corresponding to an ink-jet printer has the ink-receiving layer by coating or printing.
In order to apply absorbency on the ink-receiving layer, some of molding products have ink-receiving layer in which a natural organic absorptive filler (pigment) is blended (e.g. Patent Document 1).

A UV-curable coating agent is used for forming the ink-receiving layer. Excellent ink absorbency is inherently required for the ink-receiving layer provided by the coating agent of this type and, in addition, in order to obtain vivid and attractive print image, excellent surface smoothness and surface glossiness are also required, for which some solutions have been proposed.
An exemplary solution provides an ink-absorbing layer having surface roughness of 0.40µm or less and mirror glossiness in a range of 30 to 150 (Patent Document 2). In the Patent Document 2, in order to form a uniform coating film of surface roughness of 0.40µm or less by spin coating, viscosity of UV-curing resin composition forming the ink-absorbing layer is set at 40P or less. Alternatively, when the coating film is formed by screen-printing, the viscosity of the UV-curing resin composition is set in a range of 40 to 100P.
Another exemplary solution employs a coating agent containing water-absorptive filler with average particle size of 0.1 to 20µm, which is cured by active energy beam (Patent Document 3). In the Patent Document 3, the content of the water-absorptive filler is set in a range of 5 to 50mass% in order to provide sufficient water-based-ink-absorbency on the surface of the water-based-ink-receiving layer.

[Patent Document 1] JP-B-2829220
[Patent Document 2] JP-A-2002-237103
[Patent Document 3] JP-A-2005-38491

### Disclosure of the Invention

### Problems to Be Solved by the Invention

In the Patent Document 1, since the ink is absorbed by the ink-receiving layer, though inkjet printing and the like can be clearly applied on the surface of the information recording medium, surface smoothness and surface glossiness of the ink-receiving layer remains unimproved.
Surface smoothness and surface glossiness of the ink-receiving layer are improved in the Patent Documents 2 and 3 as compared with the Patent Document 1, which, however, do not provide the level of surface smoothness and surface glossiness recently in demand.

An object of the present invention is to provide a coating agent for forming an ink-receiving layer with excellent surface glossiness and surface smoothness as well as ink-absorbency, a molding product and producing method of the coating agent.

### Means for Solving the Problems

The inventors have found that it is required for achieving the above object to set maximum particle size as well as mean particle size of water-absorptive filler within a predetermined range.
A coating agent according to an aspect of the invention is cured by active energy beam, the coating agent containing: a water-absorptive filler having mean particle size of 0.4µm or less and maximum particle size of 4µm or less, where viscosity of the coating agent is 30Pa·s or less.
A molding product according to another aspect of the invention contains: a base material; and the coating agent applied on a surface of the base material.
In the molding product according to the above aspect of the invention, the base material is preferably a resin base material, and the coating agent is preferably an ink-receiving layer. The ink-receiving layer preferably receives an water-based ink.

Since the coating agent used in the above aspect of the invention cures by active energy beam such as ultraviolet, extra energy is not applied on an object on which the coating agent is applied as compared with heat-curing agent, so that degradation on the object on which the coating agent is applied can be prevented.
Since the mean particle size and maximum particle size of the water-absorptive filler are respectively 0.4µm or less and 4µm or less, excellent surface glossiness and surface smoothness as compared to conventional coating agent can be obtained.
Further, since the viscosity of the coating agent is 30Pa·s or less, the coating agent can be easily applied on the base material (object to be coated). In other words, though various methods may be used for applying the coating agent, when the viscosity of the coating agent exceeds 30Pa·s, the flowability of the coating agent itself is lost and application process of the coating agent becomes difficult irrespective of which method is used.

In the above aspects of the invention, the content of the water-absorptive filler is preferably in a range of 5 to 40mass%.
When the content of the water-absorptive filler is less than 5mass%, sufficient absorbency of the water-based ink cannot be applied. On the other hand, when the content exceeds 40mass%, the viscosity of the coating agent is excessively high so that surface irregularities occur.
The water-absorptive filler contained in the water-absorptive filler may be either an inorganic filler or an organic filler. The inorganic filler may be silica, talc, calcium carbonate, barium sulfate, zeolite, etc. The organic filler may be natural organic fine powder (such as collagen, silk, cellulose, starch, chitin, chitosan and shell membrane), or water-absorptive resin powder (powder such as water-absorptive acrylic resin and water-absorptive polyester resin). When using the inorganic and organic filler, one item may be used by itself, or two or more items may be combined.
In the above, since the viscosity of natural organic substance is lower than that of inorganic filler, the water-absorptive filler of the invention is preferably a natural organic substance, which preferably is one or more substance selected from the group consisting of: cellulose, silk, starch and chitosan; modified cellulose, silk, starch and chitosan; and low-molecular cellulose, silk, starch and chitosan.

The coating agent of the above aspects of the invention may be any material as long as the material is polymerizable by the irradiation of the active energy beam. For instance, a generally used UV-curable coating agent, EB(electron beam)-curable coating agent and the like (including a paint and an ink), or raw material contained in these agents can be preferably used.
The raw material may be various types of monomer. In particular, materials having at an end a reactive double bond or various reactive monomers such as an acrylate monomer and a methacrylate monomer are often used, which specifically are represented by: 2-hydroxyethyl acrylate, 2-hydroxypropyl acrylate, methyl methacrylate, ethyl methacrylate, triethylene glycol diacrylate, methoxypolyethylene glycol acrylate and the like. A reactive monomer with ring-opening polymerization such as ethylene glycol diglycidyl ether is also applicable. A derivative with polyethylene glycol etc. being introduced to the above-described material is also applicable. An oligomer or a polymer formed of the above-described monomer can appropriately be used. For instance, polyisobutyl methacrylate etc. may be used. Further, it is advisable to add a hydrophilic reactive monomer to enhance ink-absorbency. For instance, N,N-dimethylacrylamide, acryloyl morpholine, etc. can be used singularly or in combination.

The ink-receiving layer may further contain, as necessary, additives such as antifoaming agent, dispersant, water retention agent, thickener, mold releasing agent, preservative, coloring pigment, water resistant agent, humectant, fluorescent paint and UV absorbent as long as advantages of the present invention are not hindered.
The base material with the water-based ink-receiving layer being provided on the surface may be a resin board, which is represented by an optical information recording medium such as a compact disc (CD), a digital video disc (DVD), a CD-R, a CD-RW, a DVD-R, a DVD-RW, a DVD+R, a DVD+RW, a DVD-RAM, etc. In the configuration, the base material itself defines the information recording medium. On the other hand, when the information recording medium is provided by an information recording section and a resin molding body such as a cartridge that accommodates the information recording section (e.g. a flexible disc (FD), a magnet-optical (MO) disc, a mini disc (MD), a cassette tape, etc), the resin molding body such as the cartridge accommodating the information recording section defines the base material.

The thickness of the water-based ink-receiving layer provided on the surface of the base material is preferably within a range of 3 to 50 µm when being cured, and is more preferably within a range of 10 to 20 µm when being cured. If the thickness of the water-based ink-receiving layer is less than 3 µm, ink-bleeding may occur due to insufficient absorbency, and the ink may not be dried quickly. On the other hand, the thickness of the water-based ink-absorbing layer exceeding is not desirable since the information recording medium to be manufactured is likely curved due to contraction in volume when the ink-receiving layer is cured.

The centerline average roughness (Ra) of the ink-receiving layer is preferably 0.25µm or less and more preferably 0.20µm or less. Since the centerline average roughness (Ra) of the ink-receiving layer is 0.25µm or less, the surface smoothness of the ink-receiving layer can be further enhanced, so that information recording medium that displays information with high image quality and high dynamic range can be provided as a molding product.

A producing method of a coating agent according to still another aspect of the invention is for producing the coating agent according to the above aspect of the invention, the method including: adding the water-absorptive filler into a monomer that is cured by the active energy beam, and wet-grinding the water-absorptive filler.
According to the above aspect of the invention, the water-absorptive filler is added to the monomer, which is pulverized and mixed by wet-grinding (e.g. bead mill method) to prepare the coating agent.
Since wet-grinding is used as pulverizing method, the water-absorptive filler added to the monomer can be efficiently pulverized and the mean particle size and maximum particle size of the water-absorptive filler can be easily adjusted to a desired size.

A coated layer is formed by coating the coating agent manufactured according to the above aspect of the invention on a surface of the base material. In order to provide the coated layer, known coating or printing methods such as comma coating, knife coating, die coating, spin coating, screen printing, gravure printing, flexographic printing and pad printing can be used.
Coating condition of the coating agent is not particularly limited. For instance, a screen of 80 to 450 meshes can be used when performing the silk-screen printing on the surface of the base material, and it is preferable to perform printing with a screen of 170 to 380 meshes.
Coating amount is approximately 10 to 30g/m² when performing the screen printing under preferable condition (with a screen of 200 to 380 meshes). Such coating amount is exemplified in the case of performing the screen printing with the screen of approximately 200 meshes, however, the coating amount may be approximately 10 to 40g/m² as a guide for other coating methods or printing methods.

The ink-receiving layer is provided by irradiating active energy beam on the surface of the coated layer to cure the coated layer. Irradiation condition of the active energy beam is not particularly limited, and can appropriately be determined according to the kind of the UV-curable (or EB-curable) coating agent applied to the ink-receiving layer or the thickness of the ink-receiving layer.

### Brief Description of Drawings

Fig. 1 is a cross section showing an information recording medium according to an embodiment of the invention.
Fig. 2 is a schematic illustration of a bead mill for producing a coating agent.
Fig. 3 is a schematic illustration for crushing water-absorptive filler by a bead mill.

### Explanation of Codes

1...Information recording medium (molding product)
2...Ink-receiving layer
3...Base material
21... Water-absorptive filler
4...Bead mill (coating agent producing apparatus)
44 ... Bead

### Best Mode for Carrying Out the Invention

An embodiment of the present invention will be described below with reference to the attached drawings.

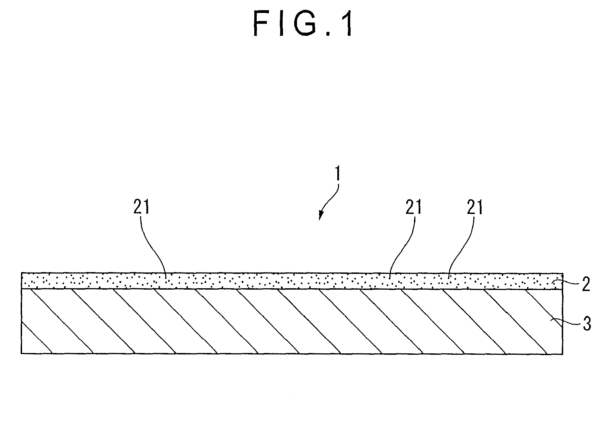

Fig. 1 is a cross section of an information recording medium (molding product) according to the present embodiment.
As shown in Fig. 1, an information recording medium 1 of the present embodiment is so formed that the water-based ink absorbing layer 2 which can be cured by irradiation of ultraviolet is provided on a surface of a disc-like base material 3.
Though not shown, a layer (an information recording layer) storing information of the information recording medium 1 of the present embodiment is included in a layer structure of the base material 3 in Fig. 1.

The ink-receiving layer 2 is provided by coating a coating agent containing water-absorptive filler 21. The water-absorptive filler 21 is preferably natural organic substance in terms of properties of coating film and stability in forming the water-based ink-receiving layer 2 and printability of the water-based ink-receiving layer, which more preferably is one or more substance selected from the group consisting of: cellulose, silk, starch and chitosan; modified cellulose, silk, starch and chitosan; and low-molecular cellulose, silk, starch and chitosan.
Mean particle size of the water-absorptive filler 21 is 0.4µm or less and 0.1µm or more. Maximum particle size of the water-absorptive filler 21 is 4µm or less and 0.5µm or more.

When the mean particle size exceeds 0.4µm, irregularity on the surface of the ink-receiving layer 2 becomes prominent to be delustered. It is preferable that the mean particle size is lowered in order to reduce the irregularities on the surface of the ink-receiving layer 2. However, when the mean particle size is less than 0.1 µm, excessive production cost (e.g. increase in bead-mill processing time) is required for producing the water-absorptive filler 21, which is far from practical.
When the maximum particle size exceeds 4µm, irregularity on the surface of the ink-receiving layer 2 is magnified to be delustered. It is preferable that the maximum particle size is lowered in order to reduce the irregularities on the surface of the ink-receiving layer 2. However, in order to the maximum particle size at less than 0.5µm, excessive production cost (e.g. increase in bead-mill processing time) is required for producing the water-absorptive filler 21, which is far from practical.
The content of the water-absorptive filler relative to the entire coating agent is in the range of 5 to 40mass%.
When the content of the water-absorptive filler is less than 5mass%, sufficient absorbency of the water-based ink cannot be applied. On the other hand, when the content exceeds 40mass%, the coating agent becomes too viscous to be used for printing.
The viscosity of the coating agent is 30Pa·s or less. When the viscosity exceeds 30Pa·s, fluidity of the coating agent itself is lost to magnify the surface irregularities, making it difficult to apply the coating agent on the base material 3.
The base material 3 on which the water-based ink-receiving layer 2 is provided is formed by a disc board made of polycarbonate resin.

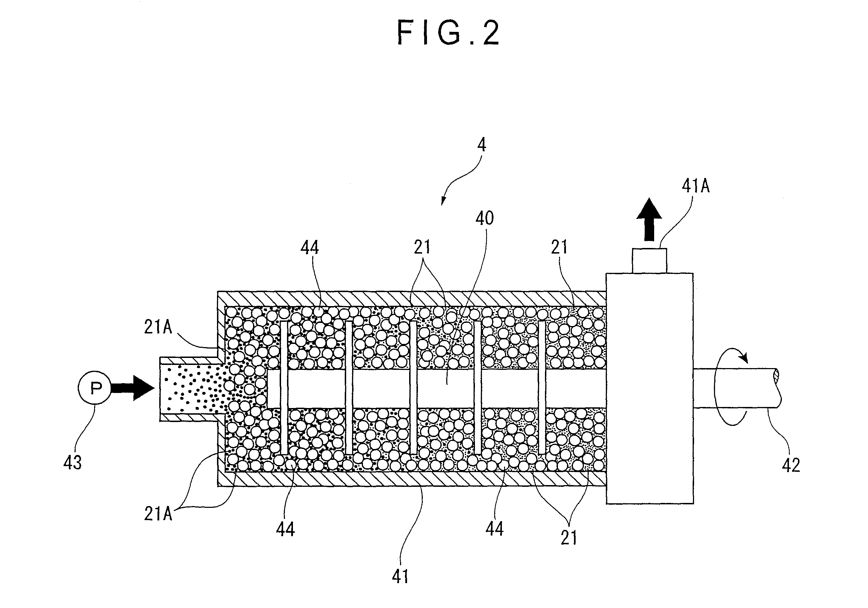

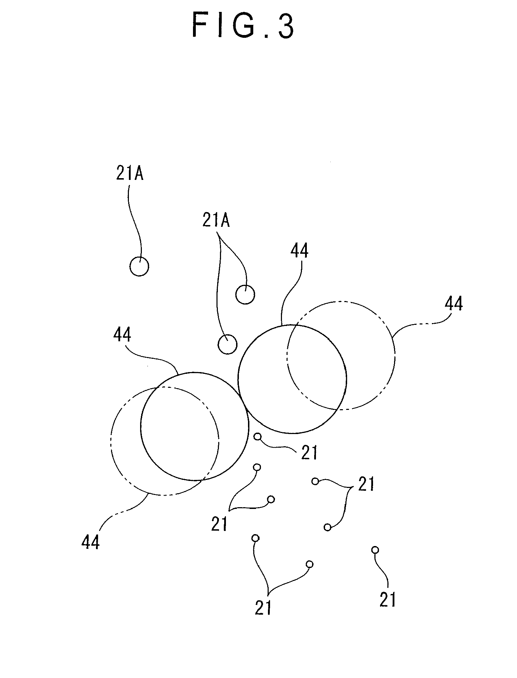

Next, producing method of the coating agent according to the present embodiment will be described below with reference to Figs. 2 and 3.
Fig. 2 shows a schematic arrangement of a bead mill 4 as an apparatus used for producing the coating agent.
In Fig. 2, the bead mill 4 is provided with a screw 40 rotatably housed within a cylinder 41 and a rotary shaft 42 to which the screw 40 is connected.
An opening provided on an end of the cylinder 41 is in communication with a pump 43, through which slurry added with water-absorptive filler 21A preliminarily dispersed in a UV-curable monomer, for instance, acryloyl morpholine manufactured by KOHJIN Co., Ltd, is supplied into the inside of the cylinder 41. Incidentally, the preliminary dispersion of the water-absorptive filler is not limited to specific method but may be effected by conventional arrangement.
When the screw 40 is rotated in accordance with the rotation of the rotary shaft 42, the slurry is discharged through an opening 41 A provided on a base end of the cylinder 41 while being kneaded by the screw 40 and a plurality of beads 44 housed within the cylinder 41 in advance.

As shown in Fig. 3, when the slurry is kneaded within the cylinder 41, the plurality of beads 44 collide with each other in accordance with the rotation of the screw 40. Then, the preliminarily dispersed water-absorptive filler 21A is sandwiched between the colliding plurality of beads 44 to be crushed. The preliminarily dispersed water-absorptive filler 21 A is continuously crushed by the beads 44 to obtain a predetermined size of the water-absorptive filler 21. The water-absorptive filler 21 of the predetermined size is discharged through the opening 41 A of the cylinder 41 integrally mixed with the UV-curable monomer.

The coating agent thus manufactured is applied on a surface of the base material 3 by a known method such as screen printing to provide a coated layer of a predetermined thickness on the surface of the base material 3.
Ultraviolet is irradiated on the coated layer by a known ultraviolet irradiating unit (not shown). The coated layer is cured by the ultraviolet irradiation, so that the information recording medium 1 provided with the ink-receiving layer 2 on the surface of the base material 3 can be obtained.

According to the present embodiment, following advantages can be obtained.
(1) Since the coating agent is cured by ultraviolet, no extra energy is applied on the information recording layer of the information recording medium 1, so that degradation of the information recording medium 1 can be prevented and production speed of the information recording medium 1 can be improved.
(2) Since the mean particle size and maximum particle size of the water-absorptive filler 21 contained in the coating agent are respectively 0.4µm or less and 4µm or less, excellent surface glossiness and surface smoothness as compared to conventional coating agent can be obtained. Especially, since the maximum particle size is 4µm or less, size difference of the water-absorptive filler 21 can be reduced, thus restraining the surface irregularities on the ink-receiving layer 2 to an extremely small value.
(3) Since the viscosity of the coating agent is 30Pa·s, the coating agent has relatively high fluidity, so that application of the coating agent onto the base material 3 can be facilitated and the coating agent can be suitably used for serigraph usually employed in a production line.

(4) Since the content of the water-absorptive filler in the coating agent is 10mass% or more, sufficient absorbency of the water-based ink can be applied, thus allowing clear inkjet printing on the surface of the information recording medium 1.

(5) When the coating agent is manufactured, after adding large-size water-absorptive filler 21 A to the UV-curable monomer, wet grinding using the bead mill 4 is conducted to obtain the water-absorptive filler 21 of a predetermined size. Accordingly, the large-size water-absorptive filler 21 A added to the monomer can be efficiently crushed, so that mean particle size and maximum particle size of the water-absorptive filler 21 can be easily set to a predetermined value.

It is obvious that the above-described embodiment merely shows an embodiment of the present invention, and the present invention is not limited to the above-described embodiment but includes modifications and improvements in the contents of the present invention as long as the object and the advantage of the present invention can be achieved. In addition, specific structures and profiles when implementing the present invention can be other structures and profiles as long as an object and advantage of the present invention can be achieved.

For instance, though the base material 3 is formed by the disc board made of the polycarbonate resin in the above embodiment, it is not limited thereto but the base material 3 may be a cartridge accommodating the information recording medium 1 such as a DVD-RAM, cassette tape, MO etc. In such case, the ink-receiving layer 2 can be formed on the surface of the base material 3 as the cartridge.

Though natural organic substance is used for the water-absorptive filler 21 in the above embodiment, inorganic filler such as silica, talc, calcium carbonate, barium sulfate and zeolite may alternatively be used. In addition, the coating agent may not be UV-curable but may be EB(electron beam)-curable.

### Examples

Next, an example and comparative examples will be described below for describing the present invention in further detail. It should be noted that the present invention is not restricted to specific description of the examples and the like.

In the following example and comparative examples, following measuring method was used.

### [Measurement of Mean Particle Size and Maximum Particle Size]

Used Equipment: Microtrac MT-3300 (laser diffraction/scattering method) manufactured by NIKKISO CO., LTD.
Used Solvent: methanol refractive index 1.33
Preliminary Dispersion: Dispersed by ultrasonic generator (600W) for three minutes
Mean Particle Size: d50% data
Maximum Particle Size: Read particle size at which frequency occurred.

### [Measurement of Viscosity]

Viscosity was measured using B-type viscometer manufactured by TOKI SANGYO CO.,LTD.

### [Example 1]

Preparation of coating agent containing water-absorptive filler having mean particle size of 0.3µm and maximum particle size of 3µm:
(A) Cellulose powder was used as the water-absorptive filler. The cellulose powder was crushed in advance to exhibit mean particle size of 5µm and maximum particle size of 32µm. The cellulose powder was added to acryloyl morpholine (UV-curable monomer) manufactured by KOHJIN Co., Ltd to be contained in an amount of 10mass%.
(B) Then, wet grinding was conducted thereon while adding polymerization inhibitor as necessary.
(C) A bead mill (manufactured by Asizawa Finetech Ltd.) shown in Fig. 2 was used for the wet grinding, which was driven for residence time of 45 minutes to pulverize the filler. As a result, the mean particle size of the filler became 0.3µm and maximum particle size of the filler became 3µm.

### [Comparative Example 1]

Preparation of coating agent having mean particle size of 1µm and maximum particle size of 9µm:
Coating agent was prepared in the same manner as the Example 1 while reducing the residence time of the wet grinding to thirty minutes.

### [Comparative Example 2]

Preparation of coating agent having mean particle size of 0.5µm and maximum particle size of 5µm:
OPTBEADS 500M manufactured by NISSAN CHEMICAL INDUSTRIES, LTD (composite spherical particle composed of melamine resin and silica) was used as the water-absorptive filler, which was added to acryloyl morpholine so that the content of the filler became 10mass%.

### [Comparative Example 3]

Preparation of coating agent having mean particle size of 2µm and maximum particle size of 5µm:
OPTBEADS 2000M manufactured by NISSAN CHEMICAL INDUSTRIES, LTD was added to acryloyl morpholine so that the content of OPTBEADS became 10mass%.

### [Comparative Example 4]

Preparation of coating agent having mean particle size of 4µm and maximum particle size of 7µm:
OPTBEADS 3500M manufactured by NISSAN CHEMICAL INDUSTRIES, LTD was added to acryloyl morpholine so that the content of OPTBEADS became 10mass%.

### [Comparative Example 5]

Preparation of coating agent having mean particle size of 0.3µm and maximum particle size of 5µm:
Titanium oxide CR50 manufactured by Ishihara Sangyo Kaisha, Ltd. was used as the water-absorptive filler, which was added to acryloyl morpholine the content of the filler became 10mass%.

3 to 5mass% of Irgacure184 (manufactured by Ciba Specialty Chemicals K.K.) was added in the example and comparative examples, which was bar-coated on a PET film of 100µm thickness (Lumirror T100 manufactured by Toray Industries, Inc.) to show film thickness of 20µm. Then, ultraviolet is irradiated thereon for ten seconds by 1KW simple-exposure UV irradiator (manufactured by Japan Storage Battery Co. Ltd.) to cure the coated film.
60-degrees mirror glossiness of the prepared coated film was measured based on JIS K7105 using a gloss meter VG2000 (manufactured by Nippon Denshoku Industries Co., Ltd.). Measurement results are shown in Table 1.
Incidentally, thickener or dispersant was added as necessary to adjust the viscosity of the coating agent to 30Pa·s in the above example and comparative examples. Consequently, when the coating agent was to be applied on the PET film, since the coating agent was flowable, the coating agent could be easily applied on the PET film. On the other hand, coating agent of the same material as the above example but with viscosity exceeding 30Pa·s was prepared as another eomparative example. As a result, though the glossiness was the same as the example, since the coating agent itself was not flowable, application process of the PET film required much time and care.

**Table 1**

| | Mean Particle Size (µm) | Maximum Particle Size (µm) | Glossiness |
|---|---|---|---|
| Example 1 | 0.3 | 3 | 62 |
| Comparative Example 1 | 1 | 9 | 13 |
| Comparative Example 2 | 0.5 | 5 | 5.1 |
| Comparative Example 3 | 2 | 5 | 3.2 |
| Comparative Example 4 | 4 | 7 | 3.5 |
| Comparative Example 5 | 0.3 | 5 | 30 |

From Table 1, it can be recognized that glossiness increases as the mean particle size of the water-absorptive filler becomes small and that glossiness increases as the maximum particle size of the water-absorptive filler becomes small. Especially, by comparing the example 1 and the comparative example 5, it can be recognized that the glossiness was greatly influenced by the difference in the maximum particle size even with the same mean particle size. Accordingly, it can be concluded that the maximum particle size, as well as the mean particle size, has to be set at a predetermined value in order to improve glossiness and smoothness.

### Industrial Applicability

The present invention can be used for information recording medium such as a compact disc having base material provided with ink-receiving layer, other information recording medium and a molding product other than information recording medium.

## Claims

1. A coating agent that is cured by active energy beam, comprising:
a water-absorptive filler having mean particle size of 0.4µm or less and maximum particle size of 4µm or less,
viscosity of the coating agent being 30Pa·s or less.

2. The coating agent according to claim 1, wherein content of the water-absorptive filler is in a range of 5 to 40mass%.

3. The coating agent according to claim 1 or 2, wherein the water-absorptive filler is a natural organic substance.

4. The coating agent according to claim 3, wherein the natural organic substance is at least one of substances selected from the group consisting of: cellulose, silk, starch and chitosan; modified cellulose, silk, starch and chitosan; and low-molecular cellulose, silk, starch and chitosan.

5. A molding product, comprising: a base material; and
the coating agent according to any one of claims 1 to 4 applied on a surface of the base material.

6. The molding product according to claim 5, wherein the base material is a resin base material, and
the coating agent forms an ink-receiving layer.

7. A producing method for producing the coating agent according to any one of claims 1 to 4, comprising:
adding the water-absorptive filler into a monomer that is cured by the active energy beam, and
wet-grinding the water-absorptive filler.
